# EUROPEAN PATENT SPECIFICATION

(11) **EP 3 885 864 B1**
(45) Date of publication and mention of the grant of the patent: **29.03.2023**
(21) Application number: 21155524.8
(22) Date of filing: 05.02.2021
(51) Int. Cl.: A47J 31/54, G05B 23/02, F24H 9/00, A47J 31/00

(54) **SYSTEM AND METHOD FOR DETECTING LIMESCALE BUILDUP IN AIRCRAFT BREWING APPARATUSES**
SYSTEM UND VERFAHREN ZUR DETEKTION VON KALKABLAGERUNGEN IN FLUGZEUGBRÜHVORRICHTUNGEN
SYSTÈME ET PROCÉDÉ DE DÉTECTION D'ACCUMULATION DE CALCAIRE DANS DES APPAREILS DE BRASSAGE D'AÉRONEF

(30) Priority: 06.02.2020 US 202016783997
(43) Date of publication of application: 29.09.2021
(73) Proprietor: B/E Aerospace, Inc., Winston-Salem, NC 27105 (US)
(72) Inventor: Abu-Saymeh, Mudar S., Olathe, KS 66062 (US); MILLS, Brian P., Blue Springs, MO 64015 (US)
(74) Representative: Dehns

(56) References cited:
- EP-A1- 0 008 700
- EP-A2- 3 366 173
- DE-A1-102017 210 992
- US-A- 4 139 761
- US-A- 4 224 503

## Description

### BACKGROUND

The operation and/or reliability of select aircraft devices such as brewing apparatuses and other aircraft galley inserts may be dependent on a quality of the potable water plumbed into the aircraft devices. One metric for potable water quality includes the amount of limescale buildup (e.g., calcium deposit buildup) in the fluidic systems of the aircraft devices. The limescale buildup may result in a reduction of aircraft device performance and eventual blockage within the fluidic systems of the select aircraft devices, which may lead to aircraft device failure.

### SUMMARY

A system for detecting limescale buildup in an aircraft brewing apparatus is disclosed, in accordance with one or more embodiments of the disclosure. The system includes at least one of a monitored subsystem or a monitored component of the aircraft brewing apparatus. The system includes at least one sensor device configured to generate and transmit pressure differential data for an amount of limescale buildup in the at least one of the monitored subsystem or the monitored component. The system includes at least one controller coupled to the at least one sensor device. The at least one controller is configured to receive the pressure differential data for the at least one of the monitored subsystem or the monitored component. The at least one controller is configured to generate a trend based on the received pressure differential data and at least one of pressure differential historical data of the at least one of the monitored subsystem or the monitored component or a baseline pressure differential of the at least one of the monitored subsystem or the monitored component. The at least one controller is configured to compare the trend to at least one pressure differential threshold value. The at least one controller is configured to generate a timeline for limescale buildup maintenance of the at least one of the monitored subsystem or the monitored component based on the comparison of the trend to the at least one pressure differential threshold value. The at least one of the monitored subsystem or the monitored component is maintainable based on the generated timeline.

In some embodiments, the timeline may indicate one or more predictive maintenance intervals of the at least one of the monitored subsystem or the monitored component.

In some embodiments, the at least one controller may be configured to alert a user of the timeline including the one or more predictive maintenance intervals of the at least one of the monitored subsystem or the monitored component.

In some embodiments, the timeline may indicate a need for immediate maintenance of the at least one of the monitored subsystem or the monitored component.

In some embodiments, the at least one controller may be configured to alert a user of the timeline indicating the need for immediate maintenance of the at least one of the monitored subsystem or the monitored component.

In some embodiments, the at least one controller may be configured to disconnect the at least one of the monitored subsystem or the monitored component based on the comparison of the trend to the at least one pressure differential threshold value.

In some embodiments, the at least one sensor device may be installed within the aircraft brewing apparatus external to the at least one of the monitored subsystem or the monitored component.

In some embodiments, the at least one sensor device may be installed within the at least one of the monitored subsystem or the monitored component.

In some embodiments, the at least one of the monitored subsystem or the monitored component may lead to at least one aircraft brewing apparatus outlet.

In some embodiments, the at least one of the monitored subsystem or the monitored component may be configured to receive a fluid from a fluid supply.

In some embodiments, the fluid supply may be installed within the aircraft brewing apparatus.

In some embodiments, the fluid supply may be installed external to the aircraft brewing apparatus.

In some embodiments, the at least one of the monitored subsystem or the monitored component may be configured to receive the fluid from the fluid supply via at least one flow measurement device. The at least one flow measurement device may be configured to generate and transmit data.

In some embodiments, the at least one controller may be configured to receive data transmitted by the at least one flow measurement device.

A system for detecting limescale buildup in an aircraft brewing apparatus is disclosed, in accordance with one or more embodiments of the disclosure. The system includes at least one of a monitored subsystem or a monitored component of the aircraft brewing apparatus. The system includes at least one sensor device configured to generate and transmit heating temperature differential data for an amount of limescale buildup in the at least one of the monitored subsystem or the monitored component. The system includes at least one controller coupled to the at least one sensor device. The at least one controller is configured to receive the heating temperature differential data for the at least one of the monitored subsystem or the monitored component. The at least one controller is configured to generate a trend based on the received heating temperature differential data and at least one of heating temperature differential historical data of the at least one of the monitored subsystem or the monitored component or a baseline heating temperature differential of the at least one of the monitored subsystem or the monitored component. The at least one controller is configured to compare the trend to at least one heating temperature differential threshold value. The at least one controller is configured to generate a timeline for limescale buildup maintenance of the at least one of the monitored subsystem or the monitored component based on the comparison of the trend to the at least one heating temperature differential threshold value. The at least one of the monitored subsystem or the monitored component is maintainable based on the generated timeline.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a block diagram of a system for detecting limescale buildup in aircraft brewing apparatuses, in accordance with one or more embodiments of the disclosure;
FIG. 1B is a block diagram of a system for detecting limescale buildup in aircraft brewing apparatuses, in accordance with one or more embodiments of the disclosure;
FIG. 2A is a block diagram of a system for detecting limescale buildup in aircraft brewing apparatuses, in accordance with one or more embodiments of the disclosure;
FIG. 2B is a block diagram of a system for detecting limescale buildup in aircraft brewing apparatuses, in accordance with one or more embodiments of the disclosure;
FIG. 3 is a flow diagram of a method for detecting limescale buildup in aircraft brewing apparatuses, in accordance with one or more embodiments of the disclosure;
FIG. 4 is a graph illustrating pressure differential versus number of cycles in operation, in accordance with one or more embodiments of the disclosure;
FIG. 5 is a flow diagram of a method for detecting limescale buildup in aircraft brewing apparatuses, in accordance with one or more embodiments of the disclosure; and
FIG. 6 is a graph illustrating heating temperature differential versus number of cycles in operation, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

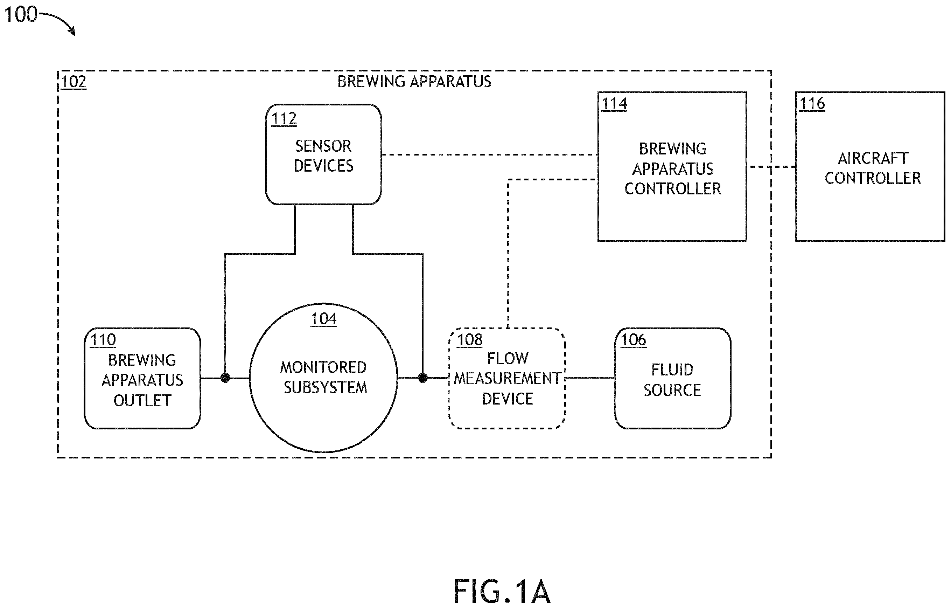

FIGS. 1A-6 generally illustrate a system and method for detecting limescale buildup in aircraft brewing apparatuses, in accordance with one or more embodiments of the disclosure.

The operation and/or reliability of select aircraft devices such as brewing apparatuses and other aircraft galley inserts may be dependent on a quality of the potable water plumbed into the aircraft devices. One metric for potable water quality includes the amount of limescale buildup (e.g., calcium deposit buildup) in the fluidic systems of the aircraft devices. The limescale buildup may result in a reduction of aircraft device performance and eventual blockage within the fluidic systems of the select aircraft devices, which may lead to aircraft device failure.

Known systems or methods of detecting limescale buildup may not be possible to implement within an aircraft brewing apparatus due to a considerable variation in potable water quality used across aircraft operators and/or obtained at different restocking locations (e.g., tarmacs, hangers, airports in general, or other restocking locations).

For example, one known system or method includes detecting limescale buildup based on a number of brews performed on the unit. This method, however, may require a single potable water supply to ensure a relatively consistent input value when determining the amount of limescale buildup in the brewing apparatus.

By way of another example, other known systems or methods include measuring with optical fiber sensors, total reflection probes, and/or quartz crystals with pre-calcified sensitive areas. These known systems or methods may be infeasible due to the size of the brewing apparatus and/or the cost to include the necessary components.

As such, it would be desirable to provide a system and method for detecting limescale buildup in aircraft brewing apparatuses. The system and method should be capable of determining limescale buildup, regardless of a variance in potable water quality and/or a variance in potable water supply. The system and method should fit within size limitations and/or cost limitations that may dictate the build of an aircraft brewing apparatus.

FIGS. 1A-2B generally illustrate a system 100 for detecting limescale buildup in an aircraft brewing apparatus 102, in accordance with one or more embodiments of the disclosure.

The brewing apparatus 102 may include a monitored subsystem 104. In general, the brewing apparatus 102 may house a brewing system including one or more subsystems such as the monitored subsystem 104, where the monitored subsystem 104 may be any subsystem with the potential for limescale buildup. The brewing apparatus 102 may include a monitored component 200. In general, the brewing apparatus 102 may house a brewing system including one or more subsystems, each subsystem including one or more components such as the monitored component 200, where the monitored component 200 may be any component with the potential for limescale buildup. It is noted herein the monitored component 200 may be a component of a monitored subsystem 104.

For example, the brewing system of the brewing apparatus 102 may include one or more heating subsystems 104 (e.g., a heat exchanger subsystem, or the like) with any number of heating components 200 known in the art (e.g., one or more heating elements, one or more heat-resistant components, or the like). By way of another example, the brewing system of the brewing apparatus 102 may include one or more fluidic subsystems 104 with any number of fluidic components 200 known in the art (e.g., fluidic components including one or more pipes or pipe couplers, one or more tubes or tube couplers, one or more valves, one or more solenoids, or the like). By way of another example, the brewing system of the brewing apparatus 102 may include one or more electrical subsystems 104 with any number of electrical components 200 known in the art (e.g., one or more wire harnesses, one or more terminal blocks, one or more sensors, or the like).

The various systems and subsystems within the brewing apparatus 102 may share any number of components. For example, the brewing apparatus 102 may include one or more heating elements external to or integrated within fluidic components (e.g., a heater-style water tank, or the like). Therefore, the above description should not be interpreted as a limitation on the disclosure but merely an illustration.

It is noted herein the brewing apparatus 102 may include multiple monitored subsystems 104. In addition, it is noted herein the brewing apparatus 102 may include multiple monitored components 200. Further, it is noted herein the brewing apparatus 102 may include multiple monitored subsystems 104 and multiple monitored components 200. Therefore, the above description should not be interpreted as a limitation on the disclosure but merely an illustration.

The monitored subsystem 104 and/or the monitored component 200 may be coupled (e.g., physically coupled, fluidically coupled, and/or electrically coupled) to a fluid source 106. For example, the fluid source 106 may include a fluid tank (e.g., a water tank). In general, the fluid source 106 may include a fluid supply such as a water supply, a milk or cream supply, an air supply, a steam supply, or other supply for a fluid used to prepare beverages with the beverage apparatus 102.

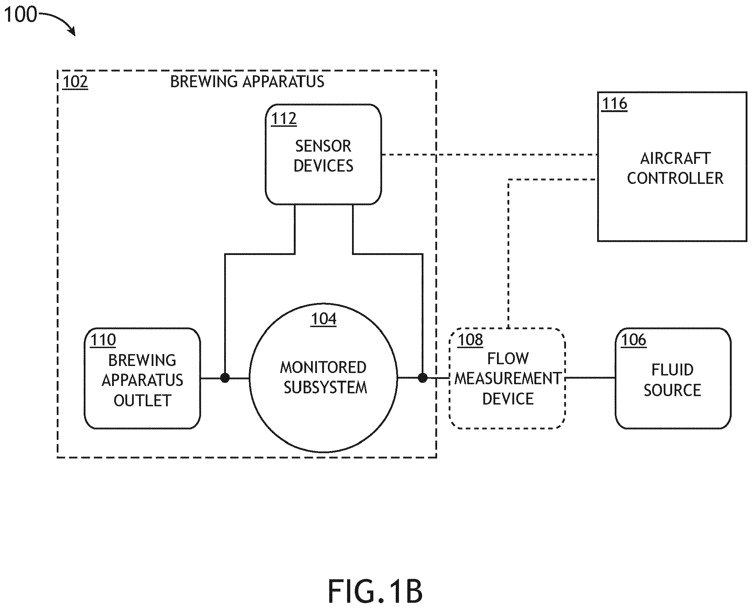

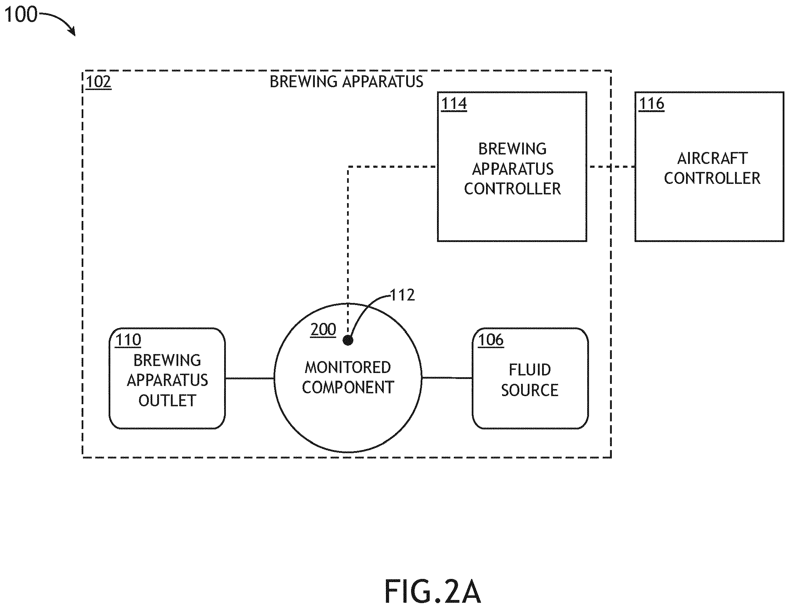

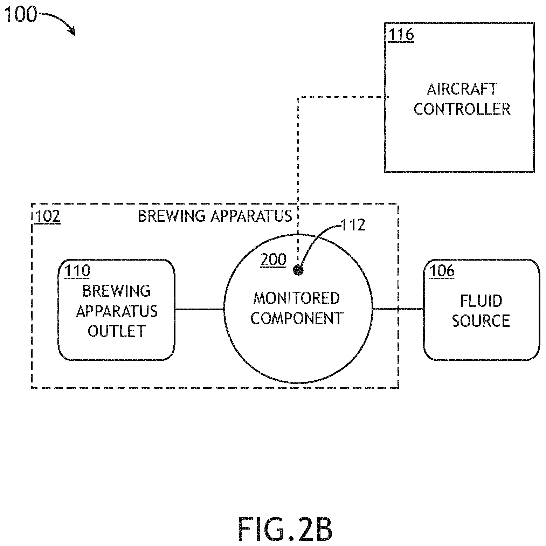

The fluid source 106 may be onboard the brewing apparatus 102 (e.g., as illustrated in FIGS. 1A and 2A). The fluid source 106 may include an aircraft fluid supply onboard an aircraft in which the brewing apparatus 102 is installed (e.g., as illustrated in FIGS. 1B and 2B). It is noted herein the brewing apparatus 102 may or may not include an onboard fluid source 106 where the aircraft fluid supply is directly coupled to the one or more components of the brewing apparatus 102. Therefore, the above description should not be interpreted as a limitation on the disclosure but merely an illustration.

The monitored subsystem 104 and/or the monitored component 200 may be directly coupled to the fluid source 106. The monitored subsystem 104 and/or the monitored component 200 may be indirectly coupled to the fluid source 106 via one or more auxiliary components. For example, the monitored subsystem 104 and/or the monitored component 200 may be coupled to the fluid source 106 via a flow measurement device 108. For instance, the flow measurement device 108 may be onboard the brewing apparatus 102 (e.g., as illustrated in FIGS. 1A and 2A). In addition, the flow measurement device 108 may be onboard an aircraft in which the brewing apparatus 102 is installed (e.g., as illustrated in FIGS. 1B and 2B). The flow measurement device 108 may be configured to provide information to assist in the determination of limescale buildup within the monitored subsystem 104 and/or the monitored component 200. It is noted herein, however, that the flow measurement device 108 may be optional. Therefore, the above description should not be interpreted as a limitation on the disclosure but merely an illustration.

The monitored subsystem 104 and/or the monitored component 200 may be coupled (e.g., physically coupled, fluidically coupled, and/or electrically coupled) to an aircraft brewing apparatus outlet 110. For example, the outlet 110 may include a froth wand, a froth nozzle, a hot water faucet, a cold water faucet, a brew cup nozzle, a carafe or server nozzle, or other component configured to output a prepared beverage or a fluid used to prepare a beverage from the brewing apparatus 102.

The brewing apparatus 102 may include one or more sensor devices 112 external to the monitored subsystem 104 (e.g., as illustrated in FIGS. 1A and 1B) and/or the monitored component 200. For example, the one or more sensor devices 112 may include one or more pressure-sensing devices. For instance, the one or more pressure-sensing devices may measure the fluid pressure differential across the monitored subsystem 104 and/or the monitored component 200.

The one or more sensor devices 112 may include pressure transducer sensors or sensor probes installed within fluidic lines between the fluid source 106 and the monitored subsystem 104 and within fluidic lines between the monitored subsystem 104 and the brewing apparatus outlet 110, such that the one or more sensor devices 112 may receive pressure readings to determine the fluid pressure differential. It is noted herein the fluidic lines between the fluid source 106 and the monitored subsystem 104 and between the monitored subsystem 104 and the brewing apparatus outlet 110 may include fluidic branch lines leading to the one or more sensor devices 112, such that the one or more sensor devices 112 may determine the fluid pressure differential internally (e.g., the one or more sensor devices 112 are within a housing separate from the main fluidic lines and configured to receive the branch fluidic lines).

It is noted herein the one or more sensor devices 112 may need to be added to an aircraft brewing apparatus 102, where the one or more sensor devices 112 include pressure-sensing devices. In addition, it is noted herein the pressure-sensing devices may be integrated within the monitored subsystem 104 and/or the monitored component 200. Therefore, the above description should not be interpreted as a limitation on the disclosure but merely an illustration.

The brewing apparatus 102 may include one or more sensor devices 112 integrated within the monitored subsystem 104 and/or the monitored component 200 (e.g., as illustrated in FIGS. 2A and 2B). For example, the one or more sensor devices 112 may include one or more temperature-sensing devices. For instance, the one or more temperature-sensing devices 112 may measure the heating temperature differential across the monitored subsystem 104 and/or the monitored component 200.

It is noted herein the one or more sensor devices 112 may be installed in an aircraft brewing apparatus 102 and re-purposed, where the one or more sensor devices 112 include temperature-sensing devices. In addition, it is noted herein the temperature-sensing devices may be external of the monitored subsystem 104 and/or the monitored component 200. Therefore, the above description should not be interpreted as a limitation on the disclosure but merely an illustration.

The brewing apparatus 102 may include an aircraft brewing apparatus controller 114. The brewing apparatus controller 114 may be coupled (e.g., physically coupled and/or electrically coupled) to the one or more sensor devices 112. The brewing apparatus controller 114 may be coupled (e.g., physically coupled, fluidically coupled, and/or electrically coupled) to the flow measurement device 108, where the flow measurement device 108 is installed within the brewing apparatus 102.

The brewing apparatus 102 may be coupled (e.g., physically coupled, fluidically coupled, and/or electrically coupled) to an aircraft controller 116. For example, as illustrated in FIGS. 1A and 2A, the aircraft controller 116 may be coupled to the brewing apparatus controller 114, and the brewing apparatus controller 114 may be coupled to one or more components of the brewing apparatus 102. By way of another example, as illustrated in FIGS. 1B and 2B, the aircraft controller 116 may be directly coupled to one or more components of the brewing apparatus 102. It is noted herein the brewing apparatus 102 may or may not include the brewing apparatus controller 114 where the aircraft controller 116 is directly coupled to the one or more components of the brewing apparatus 102. Therefore, the above description should not be interpreted as a limitation on the disclosure but merely an illustration.

The brewing apparatus controller 114 and/or the aircraft controller 116 may be configured to transmit and/or receive data. By way of another example, the brewing apparatus controller 114 and/or the aircraft controller 116 may be configured to record event logs and may transmit the event logs (e.g., to other onboard or offboard controllers, or the like). By way of another example, the brewing apparatus controller 114 and/or the aircraft controller 116 may be configured to receive information and/or commands, either in response to or independent of the transmitted event logs. By way of another example, the brewing apparatus controller 114 and/or the aircraft controller 116 may be configured to determine type and/or timing of maintenance, either in response to or independent of the recorded event logs.

The brewing apparatus controller 114 and/or the aircraft controller 116 may include one or more processors and memory. The memory may store one or more sets of program instructions. The one or more processors may be configured to execute the one or more sets of program instructions to carry out one or more of the various steps described throughout the present disclosure. The brewing apparatus controller 114 and/or the aircraft controller 116 may include one or more communication interfaces. The brewing apparatus controller 114 and/or the aircraft controller 116 may include or be coupled to a user interface. The user interface may include one or more display devices. The user interface may include one or more user input devices.

The brewing apparatus controller 114 and/or the aircraft controller 116 may be configured to determine the need for maintenance of the brewing apparatus 102 based on one or more select thresholds or threshold values. For example, the one or more thresholds or threshold values may be pre-determined and stored within memory. By way of another example, the one or more thresholds or threshold values set by an operator.

For example, the one or more select thresholds may include a single upper bound and/or a single lower bound. For instance, the single upper bound and/or the single lower bound may be at a level where a need for maintenance is predictive (e.g., determining when a limescale buildup will be at a select level of blockage or at full blockage), allowing the user to determine a time to perform the suggested maintenance. In addition, the single upper bound and/or the single lower bound may be at a level where a need for maintenance may be immediate as the aircraft brewing apparatus 102 is in danger of malfunctioning or breaking (e.g., a limescale buildup is at a select level of blockage or at full blockage).

By way of another example, the one or more select thresholds include multiple upper bounds and/or multiple lower bounds. For instance, the multiple upper bounds and/or the multiple lower bounds may include a first level where a need for maintenance is predictive to allow a user to determine a time to perform the suggested maintenance, and may include a second level where a need for maintenance is immediate where the aircraft brewing apparatus 102 is in danger of malfunctioning or breaking.

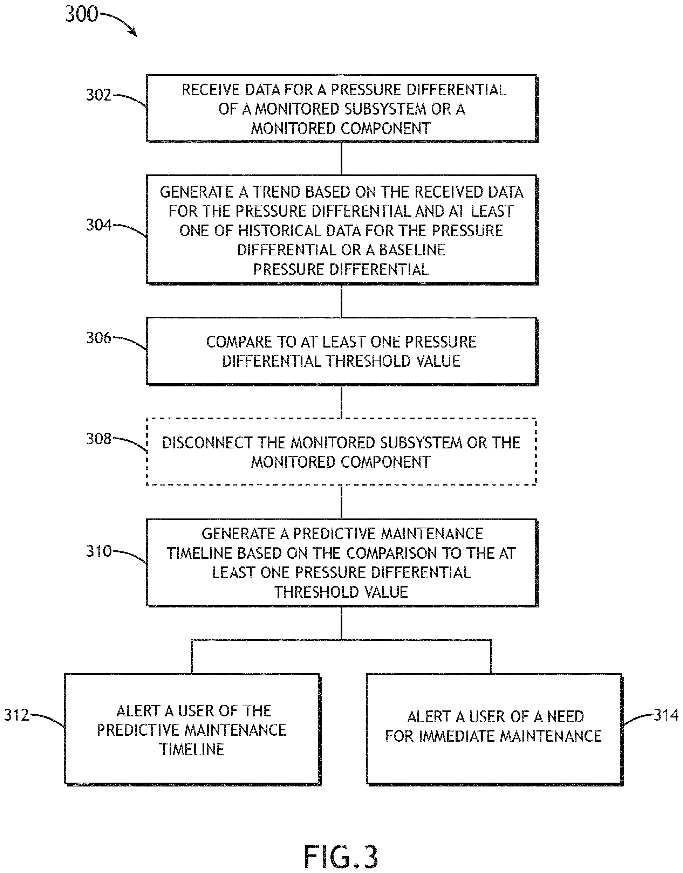

FIG. 3 illustrates a method or process 300 for detecting limescale buildup in aircraft brewing apparatuses, in accordance with one or more embodiments of the disclosure.

A buildup of limescale in the monitored subsystem 104 and/or the monitored component 200 may cause an increase in a pressure differential across the monitored subsystem 104. For example, the pressure differential may be low where there is no limescale buildup or little limescale buildup. By way of another example, the pressure differential may increase as the amount of limescale buildup increases.

In a step 302, data may be received for a pressure differential of a monitored subsystem or a monitored component. The aircraft brewing apparatus controller 114 and/or the aircraft controller 116 may receive data from the one or more sensor devices 112 to determine a pressure differential across the monitored subsystem 104 and/or the monitored component 200. The data may be stored within the aircraft brewing apparatus controller 114 and/or the aircraft controller 116 (e.g., within memory).

In a step 304, a trend may be generated based on the received data for the pressure differential and at least one of historical data for the pressure differential or a baseline pressure differential. The historical data and/or the baseline pressure differential may be stored within the aircraft brewing apparatus controller 114 and/or the aircraft controller 116.

In a step 306, the trend may be compared to at least one pressure differential threshold value. The at least one pressure differential threshold value may be stored within the aircraft brewing apparatus controller 114 and/or the aircraft controller 116 (e.g., within memory).

The comparing to the trend may be to determine whether the at least one pressure differential threshold value is met or exceeded. The determining of the meeting or exceeding the at least one pressure differential threshold value may include a single-reading pressure differential between the fluid pressure from the fluid source 106 to the monitored subsystem 104 and the fluid pressure from the monitored subsystem 104 to the aircraft brewing apparatus outlet 110. In addition, the determining of the meeting or exceeding the at least one pressure differential threshold value may include comparing historical pressure differentials to a real-time or nearly real-time pressure differential between the fluid pressure from the fluid source 106 to the monitored subsystem 104 and the fluid pressure from the monitored subsystem 104 to the aircraft brewing apparatus outlet 110. Further, the determining of the meeting or exceeding the at least one pressure differential threshold value may include comparing a baseline pressure differential to a real-time or nearly real-time difference between the fluid pressure from the fluid source 106 to the monitored subsystem 104 and the fluid pressure from the monitored subsystem 104 to the aircraft brewing apparatus outlet 110.

It is noted herein the determining of the meeting or exceeding the at least one pressure differential threshold value may include a combination of data. For example, the determining of the meeting or exceeding the at least one pressure differential threshold value may include comparing previously logged and stored data of a pressure differential determined by a first sensor device 112 with baseline data recorded using a separate sensor device 112 downstream from the first sensor device 112. Therefore, the above description should not be interpreted as a limitation on the disclosure but merely an illustration.

In a step 308, the monitored subsystem or the monitored component may be disconnected. Where the process 300 measures a pressure differential that meets or exceeds the at least one pressure differential threshold value, the aircraft brewing apparatus controller 114 and/or the aircraft controller 116 may shut off the monitored subsystem 104 and/or the monitored component 200. It is noted herein, however, that step 308 may be optional (e.g., where the need for maintenance of the monitored subsystem or the monitored components is non-critical to the aircraft brewing apparatus 102).

In a step 310, a predictive maintenance timeline may be generated for maintenance based on the comparison to the at least one pressure differential threshold value. The predictive maintenance timeline may indicate when a particular threshold value will be met. For example, the particular threshold value may be a predictive maintenance threshold value. By way of another example, the particular threshold value may be an immediate maintenance threshold value.

In a step 312, a user may be alerted of the predictive maintenance timeline. In a step 314, the user may be alerted of a need for immediate maintenance. Where the process 300 measures a pressure differential that meets or exceeds the at least one pressure differential threshold value, the aircraft brewing apparatus controller 114 and/or the aircraft controller 116 may notify a user (e.g., an onboard crew member, a maintenance worker, a field test operator, a factory line operator, or the like) the aircraft brewing apparatus 102 is in need of maintenance. For example, the timeline may indicate one or more predictive maintenance intervals. By way of another example, the timeline may indicate a need for immediate maintenance.

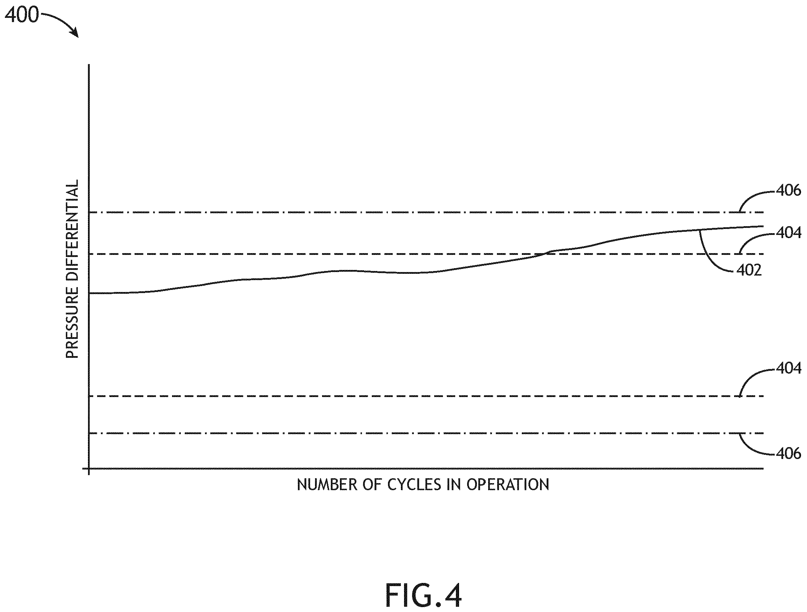

The data, the trend, and/or the thresholds may be compiled in a graph format and presented to a user. FIG. 4 illustrates a graph 400 comparing pressure differential versus number of cycles in operation, in accordance with one or more embodiments of the disclosure. As the number of cycles in operation increases, each pressure differential reading 402 may be compiled and the trending toward a predictive maintenance threshold value 404 may be monitored and/or an immediate maintenance threshold value 406 may be monitored. A user may be able to review the trending to determine a timeline when maintenance may be necessary, either in a future timeframe or within an immediate timeframe.

Although embodiments of the disclosure illustrate that the alerting of the need for immediate maintenance may follow the generation of the predictive maintenance timeline, it is noted herein that the alerting of the need for immediate maintenance may occur following the determining of the meeting or exceeding the at least one pressure differential threshold value. For example, the alerting may occur following a determining that the immediate maintenance threshold 406 has been met or exceeded. In this example, the predictive maintenance timeline may not be generated, or the predictive maintenance timeline may be generated independently of the alerting of the need for immediate maintenance. Therefore, the above description should not be interpreted as a limitation on the disclosure but merely an illustration.

Based on the predictive maintenance timeline and/or the indication of a need for immediate maintenance, the monitored subsystem or the monitored component may be maintained for limescale buildup. For example, the monitored subsystem or the monitored component may be cleaned or replaced. By way of another example, one or more components leading up to or leading away from the monitored subsystem or the monitored component (e.g., fluidic lines) may be cleaned or replaced. By way of another example, where the generated timeline indicates a false positive of a need for maintenance, the one or more sensors devices 112 may be cleaned or replaced.

In this regard, the process 300 may be configured to detect limescale buildup in the aircraft brewing apparatus 102 regardless of potable water quality and/or potable water supply. As the process 300 may require the use of added-in sensor devices 112 and/or integrated and re-purposed sensor devices 112, implementing the process 300 may not require a considerable (or even notable) change to the dimensions of the aircraft brewing apparatus 102 and/or the cost of designing or manufacturing the aircraft brewing apparatus 102.

It is noted herein that the pressure may be measured in any pressure unit known in the art including, but not limited to, Pascal (Pa), pounds per square inch (psi), torr (Torr), bar (bar), or atmosphere (atm). Therefore, the above description should not be interpreted as a limitation on the disclosure but merely an illustration.

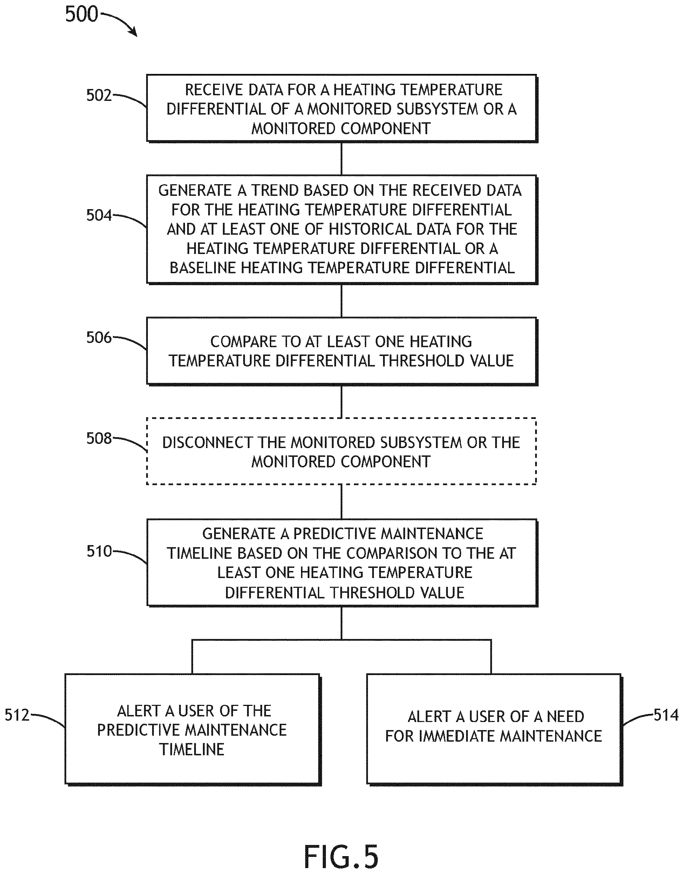

FIG. 5 illustrates a method or process 500 for detecting limescale buildup in aircraft brewing apparatuses, in accordance with one or more embodiments of the disclosure.

A buildup of limescale in the monitored subsystem 104 and/or the monitored component 200 may cause a decrease in heating temperature differential during heat transfer from a heating subsystem to a fluidic subsystem. For example, there may be a considerable heating temperature differential during heat transfer to a fluidic path where there is no limescale buildup or little limescale buildup. By way of another example, the heating temperature differential may decrease during heat transfer to the fluidic path as the amount of limescale buildup increases.

It is noted herein that one example definition of a heating temperature differential may be a difference between a temperature at a completion point of an operation and a temperature at a target set point. It is noted herein, however, that the heating temperature differential is not limited to the example definition, and that the heating temperature differential may be defined based on additional or alternative metrics. Therefore, the above description should not be interpreted as a limitation on the disclosure but merely an illustration.

In a step 502, data may be received for a heating temperature differential of monitored subsystem or a monitored component. The aircraft brewing apparatus controller 114 and/or the aircraft controller 116 may receive data from the one or more sensor devices 112 to determine the heating temperature differential across the monitored subsystem 104 and/or the monitored component 200. The data may be stored within the aircraft brewing apparatus controller 114 and/or the aircraft controller 116 (e.g., within memory).

In a step 504, a trend may be generated based on the received data for heating temperature differential and at least one of historical data for the heating temperature differential or a baseline heating temperature differential. The historical data and/or the baseline heating temperature differential may be stored within the aircraft brewing apparatus controller 114 and/or the aircraft controller 116.

In a step 506, the trend may be compared to at least one heating temperature differential threshold value. The at least one heating temperature differential threshold value may be stored within the aircraft brewing apparatus controller 114 and/or the aircraft controller 116 (e.g., within memory).

The comparing to the trend may be to determine whether the at least one heating temperature differential threshold value is met or exceeded. The determining of the meeting or exceeding the at least one heating temperature differential threshold value may include a single-reading heating temperature differential from the monitored subsystem 104 and/or the monitored component 200. In addition, the determining of the meeting or exceeding the at least one heating temperature differential threshold value may include comparing historical heating temperature differentials to a real-time or nearly real-time heating temperature differential from the monitored subsystem 104 and/or the monitored component 200. Further, the determining of the meeting or exceeding the at least one heating temperature differential threshold value may include comparing a baseline heating temperature differential to a real-time or nearly real-time difference between the heating temperature differential from the monitored subsystem 104 and/or the monitored component 200.

It is noted herein the determining of the meeting or exceeding the at least one heating temperature differential threshold value may include a combination of data. For example, the determining of the meeting or exceeding the at least one heating temperature differential threshold value may include comparing previously logged and stored data of a heating temperature differential determined by a first sensor device 112 with baseline data recorded using a separate sensor device 112 downstream from the first sensor device 112. Therefore, the above description should not be interpreted as a limitation on the disclosure but merely an illustration.

In a step 508, the monitored subsystem or the monitored component may be disconnected. Where the process 500 measures a heating temperature differential that meets or exceeds the at least one heating temperature differential threshold value, the aircraft brewing apparatus controller 114 and/or the aircraft controller 116 may shut off the monitored subsystem 104 and/or the monitored component 200. It is noted herein, however, that step 508 may be optional (e.g., where the need for maintenance of the monitored subsystem or the monitored components is non-critical to the aircraft brewing apparatus 102).

In a step 510, a predictive maintenance timeline may be generated for maintenance based on the comparison to the at least one temperature threshold value. The predictive maintenance timeline may indicate when a particular threshold value will be met. For example, the particular threshold value may be a predictive maintenance threshold. By way of another example, the particular threshold value may be an immediate maintenance threshold.

In a step 512, a user may be alerted of the predictive maintenance timeline. In a step 514, the user may be alerted of a need for immediate maintenance. Where the process 500 measures a heating temperature differential that meets or exceeds the at least one heating temperature differential threshold value, the aircraft brewing apparatus controller 114 and/or the aircraft controller 116 may notify a user (e.g., an onboard crew member, a maintenance worker, a field test operator, a factory line operator, or the like) the aircraft brewing apparatus 102 is in need of maintenance. For example, the timeline may indicate one or more predictive maintenance intervals. By way of another example, the timeline may indicate a need for immediate maintenance.

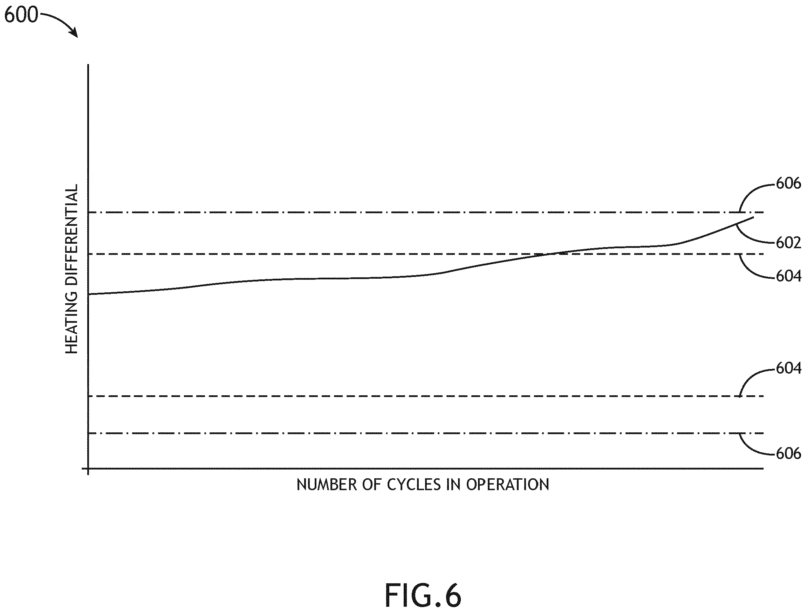

The data, the trend, and/or the thresholds may be compiled in a graph format and presented to a user. FIG. 6 illustrates a graph 600 comparing heating temperature differential versus number of cycles in operation, in accordance with one or more embodiments of the disclosure. As the number of cycles in operation increases, each heating temperature differential reading 602 may be compiled and the trending toward a predictive maintenance threshold 604 may be monitored and/or an immediate maintenance threshold 606 may be monitored. A user may be able to review the trending to determine a timeline when maintenance may be necessary, either in a future timeframe or within an immediate timeframe.

Although embodiments of the disclosure illustrate that the alerting of the need for immediate maintenance may follow the generation of the predictive maintenance timeline, it is noted herein that the alerting of the need for immediate maintenance may occur following the determining of the meeting or exceeding the at least one heating temperature differential threshold value. For example, the alerting may occur following a determining that the immediate maintenance threshold 606 has been met or exceeded. In this example, the predictive maintenance timeline may not be generated, or the predictive maintenance timeline may be generated independently of the alerting of the need for immediate maintenance. Therefore, the above description should not be interpreted as a limitation on the disclosure but merely an illustration.

Based on the predictive maintenance timeline and/or the indication of a need for immediate maintenance, the monitored subsystem or the monitored component may be maintained for limescale buildup. For example, the monitored subsystem or the monitored component may be cleaned or replaced. By way of another example, one or more components leading up to or leading away from the monitored subsystem or the monitored component (e.g., fluidic lines) may be cleaned or replaced. By way of another example, where the generated timeline indicates a false positive of a need for maintenance, the one or more sensors devices 112 may be cleaned or replaced.

In this regard, the process 500 may be configured to detect limescale buildup in the aircraft brewing apparatus 102 regardless of potable water quality and/or potable water supply. As the process 500 may require the use of added-in sensor devices 112 and/or integrated and re-purposed sensor devices 112, implementing the process 500 may not require a considerable (or even notable) change to the dimensions of the aircraft brewing apparatus 102 and/or the cost of designing or manufacturing the aircraft brewing apparatus 102.

It is noted herein that the pressure may be measured in any pressure unit known in the art including, but not limited to, Celsius (C), Fahrenheit (F), or Kelvin (K). Therefore, the above description should not be interpreted as a limitation on the disclosure but merely an illustration.

It is noted herein the methods or processes 300, 500 are not limited to the steps and/or sub-steps provided. The methods or processes 300, 500 may include more or fewer steps and/or sub-steps. The methods or processes 300, 500 may perform the steps and/or sub-steps simultaneously. The methods or processes 300, 500 may perform the steps and/or sub-steps sequentially, including in the order provided or an order other than provided. Therefore, the above description should not be interpreted as a limitation on the scope of the disclosure but merely an illustration.

In this regard, the present disclosure is directed to a system and method for detecting limescale buildup in aircraft brewing apparatuses. The system and method may be capable of determining limescale buildup, regardless of a variance in potable water quality and/or variance in potable water supply. The system and method may fit within size limitations and/or cost limitations that may dictate the build of an aircraft brewing apparatus.

It is noted herein the aircraft brewing apparatus 102, the aircraft brewing apparatus controller 114, and/or the aircraft controller 116 (and/or select components of the aircraft brewing apparatus 102, the aircraft brewing apparatus controller 114, and/or the aircraft controller 116) may be configured in accordance with guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like. However, it is noted herein that the aircraft brewing apparatus 102 may not be required to meet any regulations or design definitions. Therefore, the above description should not be interpreted as a limitation on the disclosure but merely an illustration.

Although embodiments of the disclosure are directed to an avionics environment such as an aircraft, it is noted herein the aircraft brewing apparatus 102 configured for the system and method of determining limescale buildup is not limited to the avionics environment and/or the aircraft components within the avionics environment. For example, the aircraft brewing apparatus 102 may be configured to operate in any type of vehicle known in the art. For example, the vehicle may be any air, space, land, or water-based personal equipment or vehicle; any air, space, land, or water-based commercial equipment or vehicle; any air, space, land, or water-based military equipment or vehicle known in the art. By way of another example, the aircraft brewing apparatus 102 may be an apparatus sold for commercial or industrial use in either a home or a business. Therefore, the above description should not be interpreted as a limitation on the present disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A system for detecting limescale buildup in an aircraft brewing apparatus, comprising:
at least one of a monitored subsystem (104) or a monitored component (200) of the aircraft brewing apparatus;
at least one sensor device (112) configured to generate and transmit pressure differential data for an amount of limescale buildup in the at least one of the monitored subsystem or the monitored component; and
at least one controller (114) coupled to the at least one sensor device, the at least one controller configured to:
receive the pressure differential data for the at least one of the monitored subsystem or the monitored component;
generate a trend based on the received pressure differential data and at least one of pressure differential historical data of the at least one of the monitored subsystem or the monitored component or a baseline pressure differential of the at least one of the monitored subsystem or the monitored component;
compare the trend to at least one pressure differential threshold value; and
generate a timeline for limescale buildup maintenance of the at least one of the monitored subsystem or the monitored component based on the comparison of the trend to the at least one pressure differential threshold value,
the at least one of the monitored subsystem or the monitored component being maintainable based on the generated timeline.

2. The system of Claim 1, the timeline indicating one or more predictive maintenance intervals of the at least one of the monitored subsystem or the monitored component.

3. The system of Claim 2, the at least one controller (114) configured to:
alert a user of the timeline including the one or more predictive maintenance intervals of the at least one of the monitored subsystem or the monitored component.

4. The system of Claim 1, the timeline indicating a need for immediate maintenance of the at least one of the monitored subsystem or the monitored component.

5. The system of Claim 4, the at least one controller (114) configured to:
alert a user of the timeline indicating the need for immediate maintenance of the at least one of the monitored subsystem or the monitored component.

6. The system of any preceding Claim, the at least one controller (114) configured to:
disconnect the at least one of the monitored subsystem or the monitored component based on the comparison of the trend to the at least one pressure differential threshold value.

7. The system of any preceding Claim, the at least one sensor device (112) being installed within the aircraft brewing apparatus external to the at least one of the monitored subsystem or the monitored component.

8. The system of any of Claims 1 to 6, the at least one sensor device being installed within the at least one of the monitored subsystem or the monitored component.

9. The system of any preceding Claim, the at least one of the monitored subsystem or the monitored component leading to at least one aircraft brewing apparatus outlet.

10. The system of any preceding Claim, the at least one of the monitored subsystem or the monitored component configured to receive a fluid from a fluid supply (106).

11. The system of Claim 10, the fluid supply installed within the aircraft brewing apparatus.

12. The system of Claim 10, the fluid supply installed external to the aircraft brewing apparatus.

13. The system of Claim 10, the at least one of the monitored subsystem or the monitored component configured to receive the fluid from the fluid supply via at least one flow measurement device (108), the at least one flow measurement device configured to generate and transmit data.

14. The system of Claim 13, the at least one controller (114) configured to receive data transmitted by the at least one flow measurement device (108).

15. A system for detecting limescale buildup in an aircraft brewing apparatus, comprising:
at least one of a monitored subsystem (104) or a monitored component (200) of the aircraft brewing apparatus;
at least one sensor device (112) configured to generate and transmit heating temperature differential data for an amount of limescale buildup in the at least one of the monitored subsystem or the monitored component; and
at least one controller (114) coupled to the at least one sensor device, the at least one controller configured to:
receive the heating temperature differential data for the at least one of the monitored subsystem or the monitored component;
generate a trend based on the received heating temperature differential data and at least one of heating temperature differential historical data of the at least one of the monitored subsystem or the monitored component or a baseline heating temperature differential of the at least one of the monitored subsystem or the monitored component;
compare the trend to at least one heating temperature differential threshold value; and
generate a timeline for limescale buildup maintenance of the at least one of the monitored subsystem or the monitored component based on the comparison of the trend to the at least one heating temperature differential threshold value,
the at least one of the monitored subsystem or the monitored component being maintainable based on the generated timeline.

## Patentansprüche

1. System zur Detektion von Kalkablagerungen in einer Flugzeugbrühvorrichtung, umfassend:
ein überwachtes Teilsystem (104) und/oder eine überwachte Komponente (200) der Flugzeugbrühvorrichtung;
mindestens eine Sensorvorrichtung (112), die so konfiguriert ist, dass sie Druckdifferenzdaten für eine Menge an Kalkablagerung in dem überwachten Teilsystem und/oder der überwachten Komponente erzeugt und überträgt; und
mindestens eine Steuerung (114), die mit der mindestens einen Sensorvorrichtung gekoppelt ist, wobei die mindestens eine Steuerung konfiguriert ist zum:
Empfangen der Druckdifferenzdaten für das überwachte Teilsystem und/oder die überwachte Komponente;
Erzeugen eines Trends basierend auf den empfangenen Druckdifferenzdaten und Druckdifferenzverlaufsdaten des überwachten Teilsystems und/oder der überwachten Komponente und/oder einer Basisdruckdifferenz des überwachten Teilsystems und/oder der überwachten Komponente;
Vergleichen des Trends mit mindestens einem Druckdifferenzschwellenwert; und
Erzeugen eines Zeitplans für die Kalkablagerungswartung des überwachten Teilsystems und/oder der überwachten Komponente basierend auf dem Vergleich des Trends mit dem mindestens einen Druckdifferenzschwellenwert,
wobei das überwachte Teilsystem und/oder die überwachte Komponente basierend auf dem erzeugten Zeitplan wartbar sind.

2. System nach Anspruch 1, wobei der Zeitplan ein oder mehrere vorausschauende Wartungsintervalle des überwachten Teilsystems und/oder der überwachten Komponente angibt.

3. System nach Anspruch 2, wobei die mindestens eine Steuerung (114) konfiguriert ist zum:
Hinweisen eines Benutzers auf den Zeitplan, der das eine oder die mehreren vorausschauenden Wartungsintervalle des überwachten Teilsystems und/oder der überwachten Komponente beinhaltet.

4. System nach Anspruch 1, wobei der Zeitplan eine Notwendigkeit für eine sofortige Wartung des überwachten Teilsystems und/oder der überwachten Komponente angibt.

5. System nach Anspruch 4, wobei die mindestens eine Steuerung (114) konfiguriert ist zum:
Hinweisen eines Benutzers auf den Zeitplan, der die Notwendigkeit einer sofortigen Wartung des überwachten Teilsystems und/oder der überwachten Komponente angibt.

6. System nach einem der vorhergehenden Ansprüche, wobei die mindestens eine Steuerung (114) konfiguriert ist zum:
Trennen des überwachten Teilsystems und/oder der überwachten Komponente basierend auf dem Vergleich des Trends mit dem mindestens einen Druckdifferenzschwellenwert.

7. System nach einem der vorhergehenden Ansprüche, wobei die mindestens eine Sensorvorrichtung (112) in der Flugzeugbrühvorrichtung außerhalb des überwachten Teilsystems und/oder der überwachten Komponente installiert ist.

8. System nach einem der Ansprüche 1 bis 6, wobei die mindestens eine Sensorvorrichtung innerhalb des überwachten Teilsystems und/oder der überwachten Komponente installiert ist.

9. System nach einem der vorhergehenden Ansprüche, wobei das überwachte Teilsystem und/oder die überwachte Komponente zu mindestens einem Flugzeugbrühvorrichtungsauslass führen.

10. System nach einem der vorhergehenden Ansprüche, wobei das überwachte Teilsystem und/oder die überwachte Komponente so konfiguriert sind, dass sie ein Fluid von einer Fluidversorgung (106) empfangen.

11. System nach Anspruch 10, wobei die Fluidversorgung innerhalb der Flugzeugbrühvorrichtung installiert ist.

12. System nach Anspruch 10, wobei die Fluidversorgung außerhalb der Flugzeugbrühvorrichtung installiert ist.

13. System nach Anspruch 10, wobei das überwachte Teilsystem und/oder die überwachte Komponente so konfiguriert sind, dass sie das Fluid von der Fluidversorgung über mindestens eine Durchflussmessvorrichtung (108) empfangen, wobei die mindestens eine Durchflussmessvorrichtung zum Erzeugen und Übertragen von Daten konfiguriert ist.

14. System nach Anspruch 13, wobei die mindestens eine Steuerung (114) so konfiguriert ist, dass sie Daten empfängt, die durch die mindestens eine Durchflussmessvorrichtung (108) übertragen werden.

15. System zur Detektion von Kalkablagerungen in einer Flugzeugbrühvorrichtung, umfassend:
ein überwachtes Teilsystem (104) und/oder eine überwachte Komponente (200) der Flugzeugbrühvorrichtung;
mindestens eine Sensorvorrichtung (112), die so konfiguriert ist, dass sie Heiztemperatur-Differenzdaten für eine Menge an Kalkablagerung in dem überwachten Teilsystem und/oder der überwachten Komponente erzeugt und überträgt; und
mindestens eine Steuerung (114), die mit der mindestens einen Sensorvorrichtung gekoppelt ist, wobei die mindestens eine Steuerung konfiguriert ist zum:
Empfangen der Heiztemperatur-Differenzdaten für das überwachte Teilsystem und/oder die überwachte Komponente;
Erzeugen eines Trends basierend auf den empfangenen Heiztemperatur-Differenzdaten und Heiztemperatur-Differenzverlaufsdaten des überwachten Teilsystems und/oder der überwachten Komponente und/oder einer Basisheiztemperaturdifferenz des überwachten Teilsystems und/oder der überwachten Komponente;
Vergleichen des Trends mit mindestens einem Heiztemperaturdifferenzschwellenwert; und
Erzeugen eines Zeitplans für eine Kalkablagerungswartung des überwachten Teilsystems und/oder der überwachten Komponente basierend auf dem Vergleich des Trends mit dem mindestens einen Heiztemperaturdifferenzschwellenwert,
wobei das überwachte Teilsystem und/oder die überwachte Komponente basierend auf dem erzeugten Zeitplan wartbar sind.

## Revendications

1. Système de détection d'accumulation de calcaire dans un appareil de brassage d'aéronef, comprenant :
l'un au moins parmi un sous-système surveillé (104) ou un composant surveillé (200) de l'appareil de brassage d'aéronef ;
au moins un dispositif de détection (112) configuré pour générer et transmettre des données de différence de pression pour une quantité d'accumulation de calcaire dans l'un au moins parmi le sous-système surveillé ou le composant surveillé ; et
au moins un dispositif de commande (114) couplé à au moins le dispositif de détection, l'au moins un dispositif de commande étant configuré pour :
recevoir les données de différence de pression pour l'au moins un parmi le sous-système surveillé ou le composant surveillé ;
générer une tendance sur la base des données de différence de pression reçues et d'au moins une parmi des données historiques de différence de pression de l'au moins un parmi le sous-système surveillé ou le composant surveillé ou une différence de pression de base de l'au moins un parmi le sous-système surveillé ou le composant surveillé ;
comparer la tendance à au moins une valeur de seuil de différence de pression ; et
générer une chronologie pour la maintenance de l'accumulation de calcaire de l'au moins un parmi le sous-système surveillé ou le composant surveillé sur la base de la comparaison de la tendance à l'au moins une valeur de seuil de différence de pression,
l'au moins un parmi le sous-système surveillé ou le composant surveillé pouvant être entretenu sur la base de la chronologie générée.

2. Système selon la revendication 1, la chronologie indiquant un ou plusieurs intervalles de maintenance prédictive d'au moins un parmi le sous-système surveillé ou le composant surveillé.

3. Système selon la revendication 2, l'au moins un dispositif de commande (114) étant configuré pour :
alerter un utilisateur de la chronologie comprenant le ou les intervalles de maintenance prédictive d'au moins un parmi le sous-système surveillé ou le composant surveillé.

4. Système selon la revendication 1, la chronologie indiquant un besoin de maintenance immédiate d'au moins un parmi le sous-système surveillé ou le composant surveillé.

5. Système selon la revendication 4, l'au moins un dispositif de commande (114) étant configuré pour :
alerter un utilisateur de la chronologie indiquant le besoin de maintenance immédiate d'au moins un parmi le sous-système surveillé ou le composant surveillé.

6. Système selon une quelconque revendication précédente, l'au moins un dispositif de commande (114) étant configuré pour :
déconnecter l'au moins un parmi le sous-système surveillé ou le composant surveillé sur la base de la comparaison de la tendance à l'au moins une valeur de seuil de différence de pression.

7. Système selon une quelconque revendication précédente, l'au moins un dispositif de détection (112) étant installé à l'intérieur de l'appareil de brassage d'aéronef à l'extérieur d'au moins un parmi le sous-système surveillé ou le composant surveillé.

8. Système selon l'une quelconque des revendications 1 à 6, l'au moins un dispositif de détection étant installé dans l'un au moins parmi le sous-système surveillé ou le composant surveillé.

9. Système selon une quelconque revendication précédente, l'au moins un parmi le sous-système surveillé ou le composant surveillé menant à au moins une sortie d'appareil de brassage d'aéronef.

10. Système selon une quelconque revendication précédente, l'au moins un parmi le sous-système surveillé ou le composant surveillé étant configuré pour recevoir un fluide provenant d'une alimentation en fluide (106).

11. Système selon la revendication 10, l'alimentation en fluide étant installée à l'intérieur de l'appareil de brassage d'aéronef.

12. Système selon la revendication 10, l'alimentation en fluide étant installée à l'extérieur de l'appareil de brassage d'aéronef.

13. Système selon la revendication 10, l'au moins un parmi le sous-système surveillé ou le composant surveillé étant configuré pour recevoir le fluide provenant de l'alimentation en fluide par l'intermédiaire d'au moins un dispositif de mesure de débit (108), l'au moins un dispositif de mesure de débit étant configuré pour générer et transmettre des données.

14. Système selon la revendication 13, l'au moins un dispositif de commande (114) étant configuré pour recevoir des données transmises par l'au moins un dispositif de mesure de débit (108) .

15. Système de détection d'accumulation de calcaire dans un appareil de brassage d'aéronef, comprenant :
l'un au moins parmi un sous-système surveillé (104) ou un composant surveillé (200) de l'appareil de brassage d'aéronef ;
au moins un dispositif de détection (112) configuré pour générer et transmettre des données de différence de température de chauffage pour une quantité d'accumulation de calcaire dans l'un au moins parmi le sous-système surveillé ou le composant surveillé ; et
au moins un dispositif de commande (114) couplé à au moins le dispositif de détection, l'au moins un dispositif de commande étant configuré pour :
recevoir les données de différence de température de chauffage pour l'au moins un parmi le sous-système surveillé ou le composant surveillé ;
générer une tendance sur la base des données de différence de température de chauffage reçues et de l'au moins une parmi des données historiques de différence de température de chauffage de l'au moins un parmi le sous-système surveillé ou le composant surveillé ou une différence de température de chauffage de base de l'au moins un parmi le sous-système surveillé ou le composant surveillé ;
comparer la tendance à au moins une valeur de seuil de différence de température de chauffage ; et
générer une chronologie pour la maintenance de l'accumulation de calcaire de l'au moins un parmi le sous-système surveillé ou le composant surveillé sur la base de la comparaison de la tendance à l'au moins une valeur de seuil de différence de température de chauffage,
l'au moins un parmi le sous-système surveillé ou le composant surveillé pouvant être entretenu sur la base de la chronologie générée.
